# EUROPEAN PATENT APPLICATION

(11) **EP 3 680 619 A1**
(43) Date of publication of application: **15.07.2020**
(21) Application number: 17924611.1
(22) Date of filing: 08.09.2017
(51) Int. Cl.: G01C 21/34, G01C 21/26, G08G 1/0969

(54) **DRIVING ASSISTANCE METHOD AND DRIVING ASSISTANCE DEVICE**

(71) Applicant: Nissan Motor Co., Ltd., Kanagawa 221-0023 (JP); RENAULT s.a.s., 92100 Boulogne-Billancourt (FR)
(72) Inventor: HATAYAMA Junichi, Atsugi-shi Kanagawa 243-0123 (JP)
(74) Representative: Grünecker Patent- und Rechtsanwälte PartG mbB
(86) International application number: PCT/JP2017/032524
(87) International publication number: WO 2019/049323

(57) **Abstract**

A driving assistance method and a driving assistance device can, in a road section in which one of adjacent two lanes on a main road branches into a branch road through a branch point and the other lane belongs to the main road after passing by the branch point, lead a vehicle to enter the branch road smoothly. The method and device search map data for a route on a road that the vehicle is presumed to follow (S1 to S3), and in the road section in which one of the adjacent two lanes on the main road branches into the branch road through the branch point and the other lane belongs to the main road after passing by the branch point, lead the vehicle traveling in the lane belonging to the main road after passing by the branch point to the lane branching into the branch road through the branch point when the vehicle reaches a point within a predetermined distance from the branch point (S4 and S5).

## Description

### TECHNICAL FIELD

The present invention relates to a driving assistance method and a driving assistance device.

### BACKGROUND ART

A conventional navigation device is known that changes the timing of indicating a lane change in accordance with pieces of traffic information having been accumulated, when a vehicle needs to change lanes so as to enter a recommended route through a branch point (refer to Patent Document 1).

### CITATION LIST

### PATENT LITERATURE

Patent Document 1: Japanese Patent Unexamined Publication No. 2009-47491

### SUMMARY OF INVENTION

### TECHNICAL PROBLEM

When driving in a section on a two-lane road in which one of the adjacent two lanes leads to a branch road and the other leads to a main road, the vehicle may be able to make a lane change at a branch point to enter the branch road not only from the lane leading to the branch road after passing through the branch point but also from the lane belonging to the main road after passing by the branch point. When the vehicle intends to enter the branch road at the branch point, the navigation device as disclosed in Patent Document 1 could determine, as a recommended route, not only the lane branching into the branch road through the branch point, but also the lane belonging to the main road after passing by the branch point but still allowing the vehicle to enter the branch road at the branch point. If the vehicle is traveling on the lane determined as a recommended route belonging to the main road after passing by the branch point, the vehicle may not be appropriately led to the branching lane to smoothly enter the branch road through the branch point.

To solve the above conventional problems, the present invention provides a driving assistance method and a driving assistance device capable of, in a road section in which one of adjacent two lanes on a main road branches into a branch road through a branch point and the other lane belongs to the main road after passing by the branch point, leading a vehicle to enter the branch road appropriately.

### SOLUTION TO PROBLEM

According to an aspect of the present invention, in a road section in which one of adjacent two lanes on a main road branches into a branch road through a branch point and the other lane belongs to the main road after passing by the branch point, the vehicle traveling in the lane belonging to the main road after passing by the branch point is led to the lane branching into the branch road through the branch point when the vehicle reaches a point within a predetermined distance from the branch point.

### ADVANTAGEOUS EFFECTS

The present invention can provide a driving assistance method and a driving assistance device capable of, in a road section in which one of adjacent two lanes on a main road branches into a branch road through a branch point and the other lane belongs to the main road after passing by the branch point, leading a vehicle to enter the branch road appropriately.

### BRIEF DESCRIPTION OF DRAWINGS

FIG. 1 is a block diagram illustrating an example of a driving assistance device according to an embodiment of the present invention;
FIG. 2 is a schematic diagram illustrating an example of a driving assistance method according to the embodiment of the present invention;
FIG. 3A is a schematic diagram illustrating an example of a road section including a branch road branching from a main road;
FIG. 3B is a schematic diagram illustrating route-side exit appropriateness information in the road section illustrated in FIG. 3A;
FIG. 4A is a schematic diagram illustrating an example of a road section including a branch road branching from a main road;
FIG. 4B is a schematic diagram illustrating route-side exit appropriateness information in the road section illustrated in FIG. 4A;
FIG. 5A is a schematic diagram illustrating an example of a road section including a branch road branching from a main road;
FIG. 5B is a schematic diagram illustrating route-side exit appropriateness information in the road section illustrated in FIG. 5A;
FIG. 6A is a schematic diagram illustrating the route-side exit appropriateness information and non-route-side exit appropriateness information in the road section illustrated in FIG. 4A;
FIG. 6B is a schematic diagram illustrating the route-side exit appropriateness information and non-route-side exit appropriateness information in the road section illustrated in FIG. 5A;
FIG. 7 is a schematic diagram illustrating an example of a vehicle control method according to the embodiment of the present invention;
FIG. 8A is a schematic diagram illustrating an example of a presentation method for guide information according to the embodiment of the present invention;
FIG. 8B is a schematic diagram illustrating an example of a presentation method for guide information according to the embodiment of the present invention;
FIG. 9 is a flowchart illustrating an example of the driving assistance method according to the embodiment of the present invention;
FIG. 10 is a flowchart illustrating an example of a leading information generation process according to the embodiment of the present invention;
FIG. 11A is a schematic diagram illustrating an example of a road section including a branch road branching from a main road;
FIG. 11B is a schematic diagram illustrating route-side exit appropriateness information in the road section illustrated in FIG. 11A;
FIG. 12A is a schematic diagram illustrating an example of a road section including a branch road branching from a main road;
FIG. 12B is a schematic diagram illustrating route-side exit appropriateness information in the road section illustrated in FIG. 12A;
FIG. 13A is a schematic diagram illustrating an example of a road section including a branch road branching from a main road;
FIG. 13B is a schematic diagram illustrating route-side exit appropriateness information in the road section illustrated in FIG. 13A;
FIG. 14A is a schematic diagram illustrating an example of a road section including a branch road branching from a main road;
FIG. 14B is a schematic diagram illustrating route-side exit appropriateness information in the road section illustrated in FIG. 14A; and
FIG. 15 is a schematic diagram illustrating an example of a road section including a branch road branching from a main road.

### DESCRIPTION OF EMBODIMENTS

Hereinafter, an embodiment according to the present invention will be described with reference to the drawings. In the descriptions of the drawings below, the same or similar elements are indicated by the same or similar reference numerals. It should be understood that the drawings are illustrated schematically, and are not drawn to scale. The embodiment described below illustrates a device and a method for embodying the technical ideas of the present invention, and the technical ideas of the present invention are not intended to be limited to the structures or arrangements of the elements as described herein. The technical ideas of the present invention are to cover various modifications falling within the scope of the invention as defined by the appended claims.

### <Driving Assistance Device>

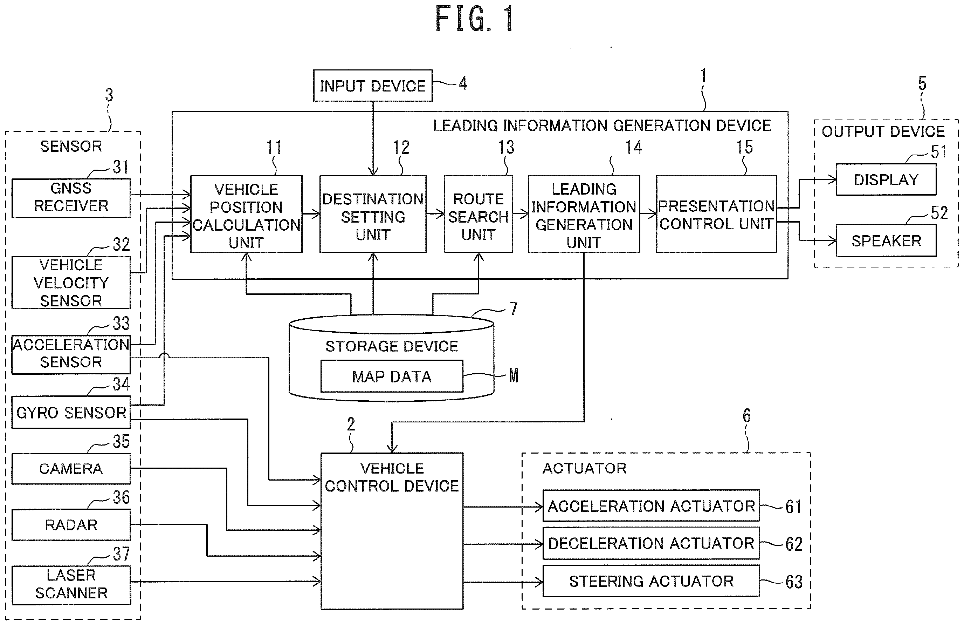

A driving assistance device according to the embodiment of the present invention can be installed in a vehicle. As illustrated in FIG. 1, the driving assistance device includes a leading information generation device 1, a vehicle control device 2, a sensor 3, an input device 4, an output device 5, an actuator 6, and a storage device 7. The leading information generation device 1, the vehicle control device 2, the sensor 3, the input device 4, the output device 5, the actuator 6, and the storage device 7 can communicate to transfer data, signals, and information to each other in a wired or wireless manner.

The sensor 3 includes traveling condition sensors for detecting traveling conditions of the vehicle such as a global navigation satellite system (GNSS) receiver 31, a vehicle velocity sensor 32, an acceleration sensor 33, and a gyro sensor 34, and surrounding condition sensors for detecting surrounding conditions such as a camera 35, a radar 36, and a laser scanner 37. The GNSS receiver 31, which is a global positioning system (GPA) receiver, receives positioning signals from a satellite, and calculates positioning information including a latitude, a longitude, and an altitude of a current position of the vehicle based on the received positioning signals. The GNSS receiver 31 outputs the calculated positioning information to the leading information generation device 1.

The vehicle velocity sensor 32 detects a velocity according to a wheel velocity of the vehicle, and outputs the detected velocity to the leading information generation device 1 and the vehicle control device 2. The acceleration sensor 33 detects acceleration which is at least either longitudinal acceleration or lateral acceleration of the vehicle, and outputs the detected acceleration to the leading information generation device 1 and the vehicle control device 2. The gyro sensor 34 detects a direction and an attitude of the vehicle, and outputs the detected direction and attitude to the leading information generation device 1 and the vehicle control device 2.

The camera 35 is a wide-angle camera installed in the vehicle at an upper portion of the windshield, for example. The camera 35 may be either a stereo camera or an omnidirectional camera. The camera 35 captures a predetermined region around the vehicle to acquire image data, and detects surrounding conditions including roads, vehicle boundary lines, constructs, road marks, signs, other vehicles, and pedestrians, from the acquired image data. The camera 35 outputs data of the detected surrounding conditions around the vehicle to the vehicle control device 2.

The radar 36 may be a range radar using millimeter waves or ultrasonic waves provided in a front grille, for example. The radar 36 scans the surroundings of the vehicle, and detects the surrounding conditions of the vehicle including a relative position (orientation) between the vehicle and an obstacle such as another vehicle, a relative velocity of the obstacle, and a distance from the vehicle to the obstacle. The radar 36 outputs data of the detected surrounding conditions of the vehicle to the vehicle control device 2.

The laser scanner 37 may be a laser rangefinder (LRF), for example. The laser scanner 37 emits a laser beam to measure the time taken by a laser pulse to be reflected off the obstacle and returned to the laser scanner 37 so as to calculate a distance to the obstacle, and also calculates a direction in which the laser beam is emitted, so as to acquire three-dimensional coordinates of the obstacle. The laser scanner 37 outputs the acquired three-dimensional coordinates of the obstacle to the vehicle control device 2.

The input device 4 may be an operation device such as a switch, a button, a keyboard, and a touch panel, a voice input device such as a microphone, or an interface which causes a camera to capture a movement of the occupant to determine an instruction, or causes an electroencephalograph to detect brainwaves of the occupant to determine an instruction. The input device 4 receives instruction information from the occupant, such as information of an instruction to set a destination to which the vehicle is to reach, or information of an instruction to choose either autonomous driving or manual driving.

The storage device 7 may be a storage medium such as a semiconductor memory or a disk medium. The storage device 7 includes a database for storing map data M. The database for storing the map data M may be controlled by a server such that differential data of the map data M updated is acquired through a service of telematics, so as to update the map data M stored in the storage device 7. The storage device 7 may be installed in the leading information generation device 1.

The map data M stored in the storage device 7 includes information per road, such as information on road nodes indicating reference points of a road, and information on road links indicating sectional aspects between the respective road nodes. The information on each road node includes an identification number, positional coordinates, the number of road links to be connected, and an identification number of the respective road links connected. The information on each road link includes an identification number, a road attribute, a link length, the number of lanes, a lane width, a road curvature, a speed limit, conditions of traffic restrictions, the presence or absence of tollgates, and the presence or absence of tunnels. The map data M further includes, per branch point (per road node) of a road, exit appropriateness information (lane-to-link information) indicating appropriateness for making an exit to each branching road (exit link) after each lane branches at a branch point. The exit appropriateness information is allotted to every road according to a road configuration and a traveling direction restricted by traffic regulations at each branch point. The exit appropriateness information is described in more detail below.

The map data M may further include lane-to-lane information (information per lane), such as information on lane nodes indicating reference points of lanes of a road, and information on lane links indicating sectional aspects between the respective lane nodes. The information on each lane node includes an identification number, positional coordinates, the number of lane links to be connected, and an identification number of the respective lane links connected. The information on each lane link includes an identification number, a type of lane, a lane width, a type of lane boundary line, conditions of traffic restrictions of lanes, a lane configuration, and a configuration of a lane reference line.

The leading information generation device 1 and the vehicle control device 2 serve as a control circuit (a controller) such as an electronic control unit (ECU) for performing arithmetic logic operations necessary for the respective operations of the driving assistance device according to the embodiment of the present invention, and may include a processor, a storage device, and an input/output interface. The processor may be a microprocessor equivalent to a central processing unit (CPU), for example, including an arithmetic logic unit (ALU), a control circuit (control device), and various types of registers. The storage device may be a semiconductor memory or a disk medium, for example, and may include a register, a cache memory, and a storage medium such as a ROM or a RAM as a main storage device. For example, the processor can execute a program (a driving assistance program) preliminarily stored in the storage device and including a series of processing necessary for the operations of the driving assistance device according to the embodiment of the present invention.

The leading information generation device 1 and the vehicle control device 2 may be physically implemented by a programmable logic device (PLD) such as a field-programmable gate array (FPGA), or may be implemented by a functional logic circuit equivalently set by processing of software in a general-purpose semiconductor integrated circuit. The elements included in the leading information generation device 1 and the vehicle control device 2 may be implemented collectively by a single piece of hardware, or each element may be implemented by individual hardware. The leading information generation device 1 may be implemented by a car navigation system such as an in-vehicle infotainment (IVI) system, and the vehicle control device 2 may be implemented by a driving assistance system such as an advanced driver-assistance system (ADAS). The leading information generation device 1 and the vehicle control device 2 are connected to each other via a communication network such as a controller area network (CAN) bus.

The leading information generation device 1 includes logic blocks such as a vehicle position calculation unit 11, a destination setting unit 12, a route search unit 13, a leading information generation unit 14, and a presentation control unit 15, as functional or physical hardware resources. The vehicle position calculation unit 11 calculates a current position of the vehicle on the map data M stored in the storage device 7, in accordance with the positional information acquired by the GNSS receiver 31, the velocity detected by the vehicle velocity sensor 32, the acceleration detected by the acceleration sensor 33, and the traveling direction of the vehicle detected by the gyro sensor 34. The calculation method for the current position of the vehicle can be determined as appropriate, and the current position may be calculated such that only the positional information acquired by the GNSS receiver 31 is checked with the map data M stored in the storage device 7.

The destination setting unit 12 sets a destination that the vehicle is to reach on the map data M stored in the storage device 7 in accordance with the instruction information input by the occupant via the input device 4. The setting method for the destination can be determined as appropriate, and the destination may be set in accordance with information preliminarily stored in the storage unit 7, instead of the instruction information input by the occupant via the input device 4.

The route search unit 13 searches for (sets) a route on a road that the vehicle is presumed to follow (a presumed traveling route) from a departure point such as the current position of the vehicle on the map data M calculated by the vehicle position calculation unit 11 to the destination set by the destination setting unit 12. The searching method for the route can be determined as appropriate, and the route may be searched in accordance with one of or a plurality of searching conditions such as a traveling distance, a presumed required time, a transfer point, and a type of road. The searching condition on which the highest priority is put can be determined as appropriate, and may be preliminarily stored in the storage device 7, for example. The route search unit 13 may search to provide the occupant with a plurality of route options so as to select one of the routes from the route options in accordance with the instruction information input by the occupant via the input device 4.

The leading information generation unit 14 generates leading information for leading (guiding) the vehicle to the route searched by the route search unit 13 (hereinafter referred to as a "searched route"). The leading information includes information necessary for the vehicle control device 2 to control the vehicle to be led to the searched route, and information necessary for the presentation control unit 15 to present the guide information to the occupant so as to lead the vehicle to the searched route.

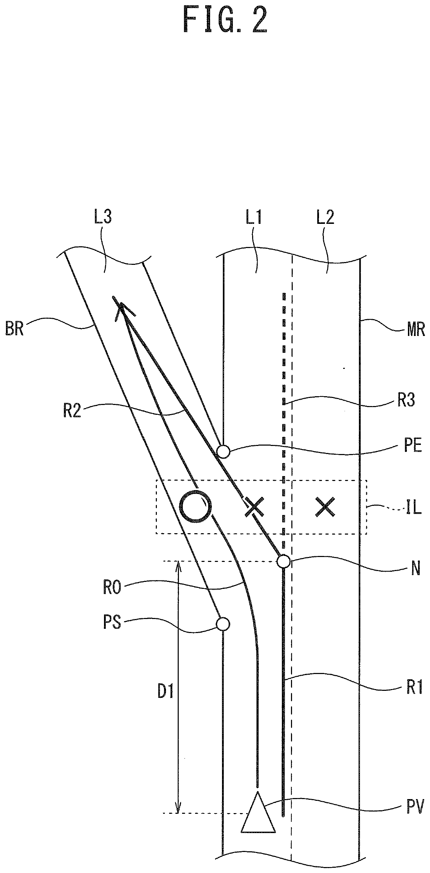

An example of the leading information generation process by the leading information generation unit 14 is described below with reference to FIG. 2. FIG. 2 illustrates a driving situation showing searched routes R1 and R2 entering a branch road BR from a main road MR in a road section including a branch point at which the branch road BR branches to the left from the main road MR. The main road MR is a two-lane road including lanes L1 and L2, and the branch road BR includes a lane L3.

The leading information generation unit 14 calculates, as a piece of the leading information, a distance D1 from a current position PV of the vehicle on the map data M to a road node N corresponding to the branch point. The leading information generation unit 14 calculates, as a piece of the leading information, flag information indicating that a road link (exit link) corresponding to the branch road BR is the searched route R2, and frag information indicating that a road link (exit link) corresponding to the main road MR is not the searched route R2 but is another route R3 (hereinafter referred to as a "non-searched route") different from the searched route R2. The leading information generation unit 14 calculates the number of lanes (two) of the main road MR and the number of lanes (one) of the branch road BR. The leading information generation unit 14 calculates, as a piece of the leading information, a branch start position PS and a branch end position PE of the branch road BR.

The leading information generation unit 14 extracts, as a piece of the leading information, exit appropriateness information (hereinafter referred to as "route-side exit appropriateness information) IL indicating appropriateness for making an exit for the road toward the searched route R2 (exit link) about the respective lanes L1, L2, and L3 present at the branch point from which the vehicle enters, from the map data M stored in the storage device 7. The route-side exit appropriateness information IL is the information indicating that the lanes L1 and L2 of the main road MR prohibit the vehicle from exiting toward the branch road BR to enter the searched route R2, and that the lane L3 of the branch road BR allows the vehicle to exit toward the branch road BR to enter the searched route R2. FIG. 2 schematically superposes the marks "○" and "×" on the respective lanes L1, L2, and L3. The mark "○" indicates that the vehicle is allowed to exit toward the searched route R2, and the mark "×" indicates that the vehicle is prohibited from exiting toward the searched route R2. The leading information generation unit 14 may calculate the route-side exit appropriateness information IL based on the searched route and the map data M, instead of extracting the route-side exit appropriateness information IL stored in the storage device 7.

The leading information generation unit 14 generates the leading information including the distance D1 from the current position PV of the vehicle to the road node N, the flag information of the searched routes R1 and R2 and the non-searched route R3, the number of the lanes in the road in each branching direction (exit link), the branch start position PS and the branch end position PE of the branch road BR, and the route-side exit appropriateness information IL, and outputs the generated leading information to the vehicle control device 2. The leading information generation unit 14 may further extract information including the speed limit, the road attribute, the curvature of the road, the presence or absence of tollgates, and the presence or absence of tunnels from the map data M stored in the storage device 7, and transmit the leading information including the additional extracted information to the vehicle control device 2.

The presentation control unit 15 outputs a control signal for controlling the output device 5 to present, to the occupant, the guide information for guiding the vehicle to the searched routes R1 and R2 in accordance with the leading information generated by the leading information generation unit 14. The output device 5 includes a display 51 and a speaker 52, for example. The display 51 displays the image data superposing the searched routes R1 and R2 on the main road MR and the branch road BR on the map data M, as illustrated in FIG. 2, in accordance with the control signal output from the presentation control unit 15. The speaker 52 outputs a voice signal for guiding the vehicle to enter the branch road BR at the branch point in accordance with the control signal from the presentation control unit 15.

The vehicle control device 2 outputs, to the actuator 6, a control signal for controlling the vehicle to travel along the searched route in accordance with the leading information generated by the leading information generation unit 14 and the traveling conditions and the surrounding conditions of the vehicle detected by the sensor 3. The vehicle control device 2 may execute autonomous driving that controls the vehicle to travel without operation by the occupant, or may execute at least one of drive control, deceleration control, and steering control so as to assist the occupant in traveling. The control by the vehicle control device 2 and the presentation of the guide information by the presentation control unit 15 are not necessarily executed at the same time. For example, the guide information by the presentation control unit 15 is not necessarily presented to the occupant during the autonomous driving by the vehicle control device 2.

For example, the vehicle control device 2 specifies the lane L1 in which the vehicle is traveling and the other lanes L2 and L3 in the road section as illustrated in FIG. 2 in accordance with the data on the surrounding conditions of the vehicle detected by the sensor 3. The vehicle control device 2 controls the vehicle to follow a traveling course R0 so as to enter the lane L3 determined to allow the vehicle to exit from the traveling lane L1 in accordance with the route-side exit appropriateness information IL.

The actuator 6 includes an acceleration actuator 61, a deceleration actuator 62, and a steering actuator 63. The acceleration actuator 61 is an electronic control throttle valve, for example, for controlling an acceleration aperture of the vehicle in accordance with the control signal from the vehicle control device 2. The deceleration actuator 62 is a hydraulic circuit, for example, for controlling a deceleration operation of the brake of the vehicle in accordance with the control signal from the vehicle control device 2. The steering actuator 63 controls the steering of the vehicle in accordance with the control signal from the vehicle control device 2.

For example, the vehicle control method using the vehicle control device 2 may include a process of transmitting, to the vehicle control device 2, the information per lane including the information on the lane node and the information on the lane link in the map data M, and controlling the vehicle by causing the vehicle control device 2 to determine a lane in which the vehicle should travel in accordance with the information per lane. However, the amount of data transmitted to the vehicle control device 2 is extremely large, increasing a load of the communication network such as a CAN bus (traffic load) connecting the leading information generation unit 14 with the vehicle control device 2, and also increasing a processing load on the vehicle control device 2 side.

The driving assistance device according to the embodiment of the present invention causes the leading information generation unit 14 to transmit, to the vehicle control device 2, the leading information including the route-side exit appropriateness information instead of the information per lane, and causes the vehicle control device 2 to determine a lane in which the vehicle should travel in accordance with the route-side exit appropriateness information so as to control the vehicle. The amount of data transmitted to the vehicle control device 2 thus can be reduced as compared with the case of using the information per lane, so as to reduce both the traffic load of the communication network such as a CAN bus connecting the leading information generation unit 14 with the vehicle control device 2, and the processing load on the vehicle control device 2 side. However, the driving assistance device according to the embodiment of the present invention may fail to specify the type of the branch point only in accordance with the route-side exit appropriateness information, depending on the road configuration and the traffic regulations at the branch point, failing to determine the lane to which the vehicle should be led to travel.

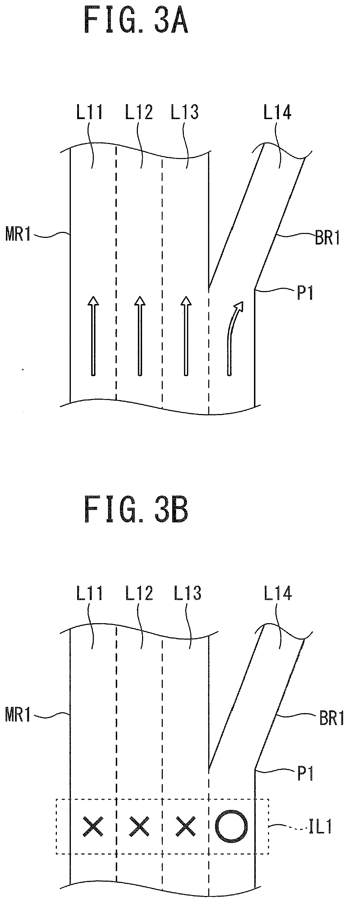

For example, a road section illustrated in FIG. 3A has a road configuration in which a branch road BR1 branches to the right from a main road MR1. The main road MR1 includes lanes L11, L12, L13, and L14 extending parallel to each other by the point in front of the branch point (before passing through the branch point). The lanes L11, L12, and L13 toward the left belong to the main road MR1 after passing by the branch point, and the rightmost lane L14 branches at the branch start position P1 into the branch road BR1 through the branch point. As schematically illustrated with the signs for permitting forward movement only in the designated directions indicated by the arrows in FIG. 3A, vehicles traveling in the lanes L11, L12, and L13 are restricted to traveling in the direction toward the main road MR1, and vehicles traveling in the lane L14 are restricted to traveling in the direction branching into the branch road BR1, in accordance with the traffic regulations.

When the branch road BR1 illustrated in FIG. 3A is a searched route, the route-side exit appropriateness information IL1 about the respective lanes L11, L12, L13, and L14 present at the branch point indicates that the vehicle is prohibited from exiting from the left three lanes L11, L12, and L13 toward the branch road BR1 (the exit link) to enter the searched route, and the vehicle is permitted to exit from the rightmost lane L14 toward the branch road BR1 (the exit link) to enter the searched route, as illustrated in FIG. 3B.

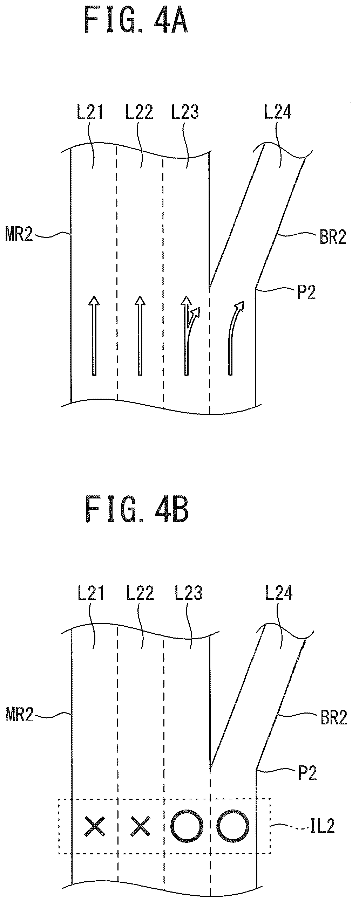

As another example, in comparison with the road section illustrated in FIG. 3A, a road section illustrated in FIG. 4A has a road configuration, similar to the road section illustrated in FIG. 3A, in which a branch road BR2 branches to the right from a main road MR2. The main road MR2 includes lanes L21, L22, L23, and L24 extending parallel to each other by the point in front of the branch point. The lanes L21, L22, and L23 toward the left belong to the main road MR2 after passing by the branch point, and the rightmost lane L24 branches at a branch start position P2 into the branch road BR2 through the branch point. As schematically illustrated with the signs for permitting forward movement only in the designated directions indicated by the arrows in FIG. 4A, vehicles traveling in the lanes L21 and L22 are restricted to traveling only in the direction toward the main road MR2, and vehicles traveling in the lane L24 are restricted to traveling only in the direction branching into the branch road BR2 in accordance with the traffic regulations in the same manner as the road section illustrated in FIG. 3A, except that vehicles traveling in the lane L23 are permitted to travel not only in the direction toward the main road MR2 but also in the direction branching into the branch road BR2, in accordance with the traffic regulations.

When the branch road BR2 illustrated in FIG. 4A is a searched route, the route-side exit appropriateness information IL2 indicates that the vehicle is prohibited from exiting from the lanes L21 and L22 toward the branch road BR2 (the exit link) to enter the searched route, and the vehicle is permitted to exit from the lanes L23 and L24 toward the branch road BR2 (the exit link) to enter the searched route, as illustrated in FIG. 4B. The road sections illustrated in FIG. 3A and FIG. 4A have the same road configuration at the branch point, but differ from each other in the route-side exit appropriateness information IL1, IL2 as illustrated in FIG. 3B and FIG. 4B, because of the difference in the traffic regulations.

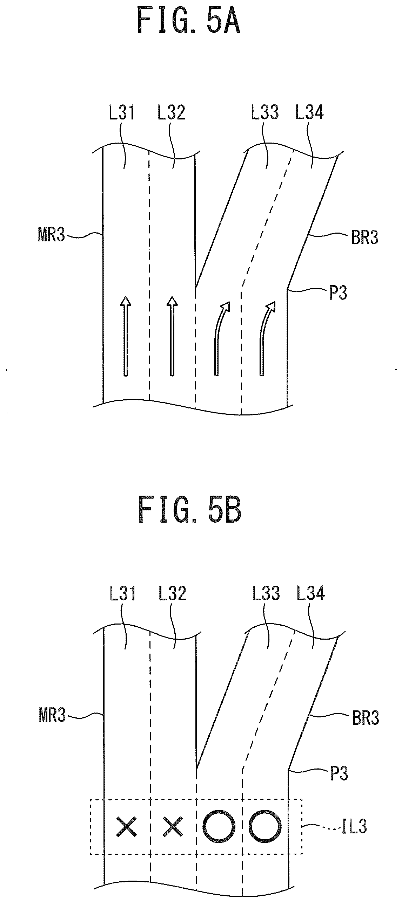

As still another example, in comparison with the road section illustrated in FIG. 4A, a road section illustrated in FIG. 5A has a road configuration in which a branch road BR3 branches to the right from a main road MR3. The main road MR3 includes lanes L31, L32, L33, and L34 extending parallel to each other by the point in front of the branch point. The lanes L31 and L32 belong to the main road MR3 after passing by the branch point, and the lanes L33 and L34 branch at a branch start position P3 into the branch road BR3 through the branch point. As schematically illustrated with the signs for permitting forward movement only in the designated directions indicated by the arrows in FIG. 5A, vehicles traveling in the lanes L31 and L32 are restricted to traveling only in the direction toward the main road MR3, and vehicles traveling in the lanes L33 and L34 are restricted to traveling only in the direction branching into the branch road BR3, in accordance with the traffic regulations.

When the branch road BR3 illustrated in FIG. 5A is a searched route, the route-side exit appropriateness information IL3 indicates that the vehicle is prohibited from exiting from the lanes L31 and L32 toward the branch road BR3 (the exit link) to enter the searched route, and the vehicle is permitted to exit from the lanes L33 and L34 toward the branch road BR3 (the exit link) to enter the searched route, as illustrated in FIG. 5B. The road sections illustrated in FIG. 4A and FIG. 5A differ from each other in the road configuration at the branch point, but have the same route-side exit appropriateness information IL2, IL3 as illustrated in FIG. 4B and FIG. 5B, because of the difference in the traffic regulations.

As described above, the road configurations in the road sections illustrated in FIG. 4A and FIG. 5A cannot be distinguished only according to the route-side exit appropriateness information IL2, IL3 at the branch point. In the road section illustrated in FIG. 5A, the vehicle is controlled to travel in either the lane L33 or the lane L34 branching into the branch road BR3 through the branch point and allowing the vehicle to exit in accordance with the route-side exit appropriateness information IL3, so as to appropriately lead the vehicle to the branch road BR3. In the road section illustrated in FIG. 4A, when the vehicle is traveling in the lane L23 belonging to the main road MR2 after passing by the branch point, the vehicle may wrongly keep traveling in the lane L23 toward the main road MR2 to pass by the branch point, without being led to make a lane change to the lane L24 near the branch point, due to the route-side exit appropriateness information IL2 indicating that the vehicle can also exit from the lane L23. In addition, the vehicle would need to make a sudden lane change to the lane L24 from the lane L23 at the branch point to enter the branch road BR2, which may lead the driver to feel uncomfortable, or may fail to change the lanes smoothly if another vehicle is traveling in the lane L24. In view of the above problems, the driving assistance device according to the embodiment of the present invention can specify the type of the branch point precisely so as to appropriately guide the vehicle, regardless of the configuration of the road section, as illustrated in FIG. 4A or FIG. 5A.

The leading information generation unit 14 extracts, in addition to the route-side exit appropriateness information about the respective lanes present at the branch point on the searched route, exit appropriateness information about lanes present at the branch point, indicating appropriateness for making an exit for a road toward a non-searched route (exit link) (hereinafter referred to as "non-route-side exit appropriateness information) in a direction different from the branching direction toward the searched route, from the map data M stored in the storage device 7. The route-side exit appropriateness information and the non-route-side exit appropriateness information may be calculated by the leading information generation unit 14 in accordance with the searched route and the map data M, instead of being preliminarily stored in the storage device 7 and extracted by the leading information generation unit 14.

The leading information generation unit 14 compares the route-side exit appropriateness information and the non-route-side exit appropriateness information on each lane present at the branch point so as to determine the presence or absence of a lane allowing the vehicle to exit toward both the searched route and the non-searched route. When there is a lane determined to allow the vehicle to exit toward both the searched route and the non-searched route, the leading information generation unit 14 transmits both the route-side exit appropriateness information and the non-route-side exit appropriateness information to the vehicle control device 2. When there is no lane that allows the vehicle to exit toward both the searched route and the non-searched route, the leading information generation unit 14 selectively transmits the route-side exit appropriateness information, without transmitting the non-route-side exit appropriateness information, to the vehicle control device 2.

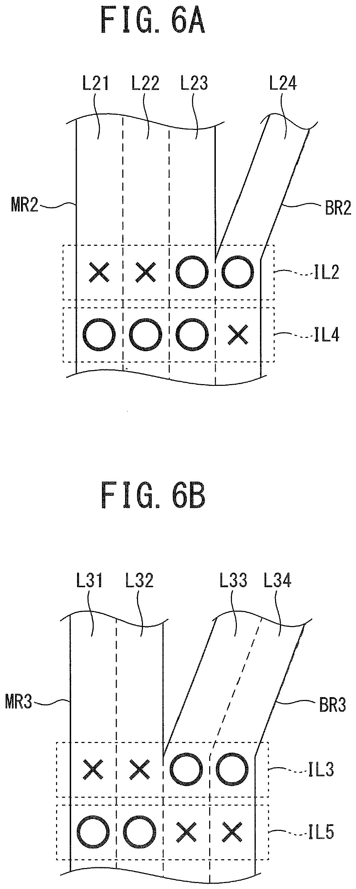

For example, as illustrated in FIG. 6A, which is the same road section as FIG. 4A, when the searched route is led to the branch road BR2, the leading information generation unit 14 extracts the route-side exit appropriateness information IL2 and the non-route-side exit appropriateness information IL4 on the respective lanes L21, L22, L23, and L24 present at the branch point. The route-side exit appropriateness information IL2 indicates that the vehicle is prohibited from exiting from the lanes L21 and L22 toward the branch road BR2 (the exit link) to enter the searched route, and the vehicle is permitted to exit from the lanes L23 and L24 toward the branch road BR2 (the exit link) to enter the searched route. The non-route-side exit appropriateness information IL4 indicates that the vehicle is permitted to exit from the lanes L21, L22, and L23 toward the main road MR2 (the exit link) to enter the non-searched route, and the vehicle is prohibited from exiting from the lane L24 toward the main road MR2 (the exit link) to enter the non-searched route.

The leading information generation unit 14 compares the route-side exit appropriateness information IL2 and the non-route-side exit appropriateness information IL4 on the respective lanes L21, L22, L23, and L24 present at the branch point, so that the lane L23 is determined to allow the vehicle to exit toward both the searched route and the non-searched route. The leading information generation unit 14 then transmits the leading information including both the route-side exit appropriateness information IL2 and the non-route-side exit appropriateness information IL4 to the vehicle control device 2. The leading information generation unit 14 may transmit the leading information further including information indicating that the vehicle should travel in the lane L24 while avoiding traveling in the lane L23 before reaching the branch point. The leading information generation unit 14 further transmits, to the presentation control unit 15, the leading information including the information necessary for the presentation control unit 15 to guide the vehicle to the searched route, and indicating that the vehicle should travel in the lane L24 before reaching the branch point.

When the branch road BR2 is the searched route, and the main road MR2 is the non-searched route, for example, the leading information generation unit 14 may compare the route-side exit appropriateness information IL2 and the non-route-side exit appropriateness information IL4 only about the lane L23, among the lanes L21, L22, and L23, closest to the branch road BR2 so as to determine whether the lane L23 allows the vehicle to exit toward both the searched route and the non-searched route, namely, determines whether the vehicle traveling in the lane L23 can be led to both the searched route and the non-searched route, instead of comparing the route-side exit appropriateness information IL2 and the non-route-side exit appropriateness information IL4 on all the lanes L21, L22, L23, and L24 present at the branch point. The lane L23 is closest to the searched route and is thus presumed to allow the vehicle to also exit toward the searched route with a higher probability than the lanes L21 and L22. Determining whether the lane L23 allows the vehicle to exit toward both the searched route and the non-searched route can obtain substantially the same determination results with a high probability as the case of comparing the route-side exit appropriateness information IL2 and the non-route-side exit appropriateness information IL4 on all the lanes L21, L22, L23, and L24, reducing a calculation load accordingly.

As another example as illustrated in FIG. 6B, which is the same road section as FIG. 5A, when the searched route is led to the branch road BR3, the leading information generation unit 14 calculates the route-side exit appropriateness information IL3 and the non-route-side exit appropriateness information IL5 according to the map data M. The route-side exit appropriateness information IL3 indicates that the vehicle is prohibited from exiting from the lanes L31 and L32 toward the branch road BR3 (the exit link) to enter the searched route, and the vehicle is permitted to exit from the lanes L33 and L34 toward the branch road BR3 (the exit link) to enter the searched route. The non-route-side exit appropriateness information IL5 indicates that the vehicle is permitted to exit from the lanes L31 and L32 toward the main road MR3 (the exit link) to enter the non-searched route, and the vehicle is prohibited from exiting from the lanes L33 and L34 toward the main road MR3 (the exit link) to enter the non-searched route.

The leading information generation unit 14 compares the route-side exit appropriateness information IL3 and the non-route-side exit appropriateness information IL5, so as to determine that there is no lane that allows the vehicle to exit toward both the branch road BR3 which is the searched route and the main road MR3 which is the non-searched route. In this case, the vehicle control device 2 controls the vehicle to travel in either the lane L33 or the lane L34 determined to allow the vehicle to exit toward the branch road BR3 in accordance with the route-side exit appropriateness information IL3, so as to guide the vehicle appropriately. The leading information generation unit 14 thus transmits the leading information selectively including the route-side exit appropriateness information IL3, without including the non-route-side exit appropriateness information IL5, to the vehicle control device 2. The leading information generation unit 14 further transmits, to the presentation control unit 15, the leading information including the information necessary for the presentation control unit 15 to guide the vehicle to the searched route.

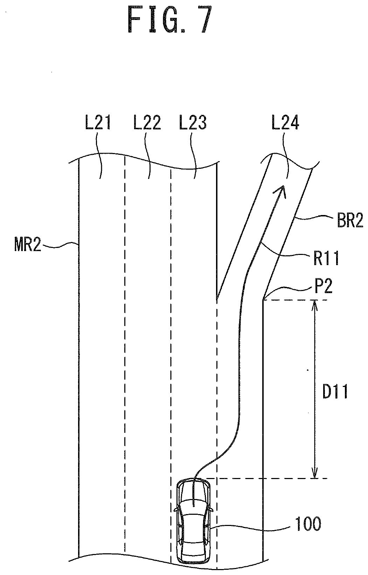

When the leading information transmitted from the leading information generation unit 14 includes both the route-side exit appropriateness information IL2 and the non-route-side exit appropriateness information IL4, the vehicle control device 2 determines that the road section includes the branch point as illustrated in FIG. 6A. When the vehicle 100 reaches a point within a predetermined distance from the branch point, and is traveling in the lane L23 belonging to the main road MR2 after passing by the branch point, as illustrated in FIG. 7, the vehicle control device 2 controls the vehicle 100, before reaching the branch point, to make a lane change to the lane L24 branching into the branch road BR2 through the branch point so as to follow a traveling route R11 to enter the branch road BR2. The range of the predetermined distance corresponds to the distance D1 from the road node D corresponding to the branch point to the current position PV of the vehicle as illustrated in FIG. 2, for example, and may be determined as appropriate depending on the type of the branch point or the velocity of the vehicle 100.

The timing of starting changing the lanes can be determined as appropriate before reaching the branch point, and may be immediately after the vehicle reaches the point within the predetermined distance from the branch point, for example. Alternatively, the timing may be a point when the vehicle control device 2 receives both the route-side exit appropriateness information IL2 and the non-route-side exit appropriateness information IL4, or may be a point when the vehicle can make a lane change to the lane L24. Alternatively, the timing may be a point when the distance D11 between the current position of the vehicle 100 and the branch start position P2 as illustrated in FIG. 7 falls to a predetermined threshold or less. Alternatively, the vehicle 100 may start changing the lanes at a point when the distance between the current position of the vehicle 100 and the road node corresponding to the branch point falls to a predetermined threshold or less. When the vehicle 100 within the predetermined distance from the branch point is already traveling in the lane L24 branching into the branch road BR2 through the branch point, the vehicle 100 may be controlled to avoid making a lane change to the lane L23 before reaching the branch point so as to keep traveling in the lane L24 to enter the branch road BR2.

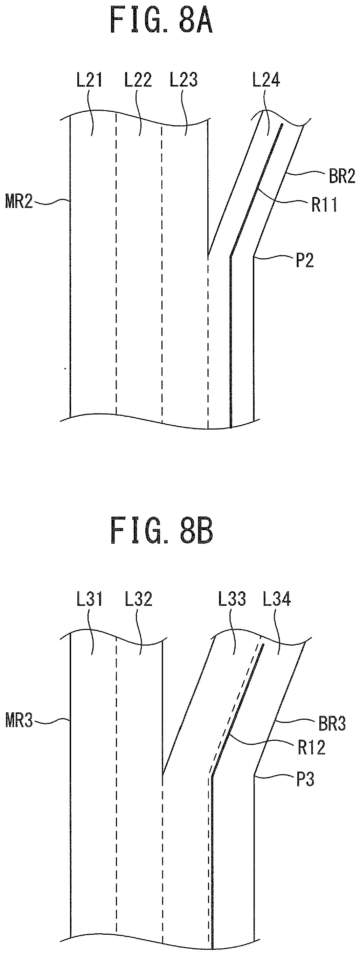

The presentation control unit 15 controls the display 51 and the speaker 52 to present, to the driver, the guide information to lead the vehicle to travel in the lane L24 branching into the branch road BR2 in accordance with the leading information transmitted from the leading information generation unit 14. As illustrated in FIG. 8A, the display 51 displays image data in which a searched route R12 is superposed on the lane L24 so as to lead the vehicle to the lane L24 branching into the branch road BR2. The speaker 52 outputs a voice signal to inform the driver of the guide information so as to lead the vehicle to travel in the lane L24 branching into the branch road BR2.

When the leading information transmitted from the leading information generation unit 14 does not include the non-route-side exit appropriateness information IL5 but only includes the route-side exit appropriateness information IL3, the vehicle control device 2 can determine that the road section includes the branch point as illustrated in FIG. 6B. Since the vehicle can travel in either the lane L33 or the lane L34, the vehicle control device 2 controls the vehicle to travel in either the lane L33 or the lane L34 to enter the branch road BR3. As illustrated in FIG. 8B, since the vehicle can travel in either the lane L33 or the lane L34, the presentation control unit 15 causes the display 51 to display image data in which the searched route R12 is superposed in a middle portion of the two lanes L33 and L34. The presentation control unit 15 may output a voice guide so as to lead the vehicle to travel in either the lane L33 or the lane L34.

### <Driving Assistance Method>

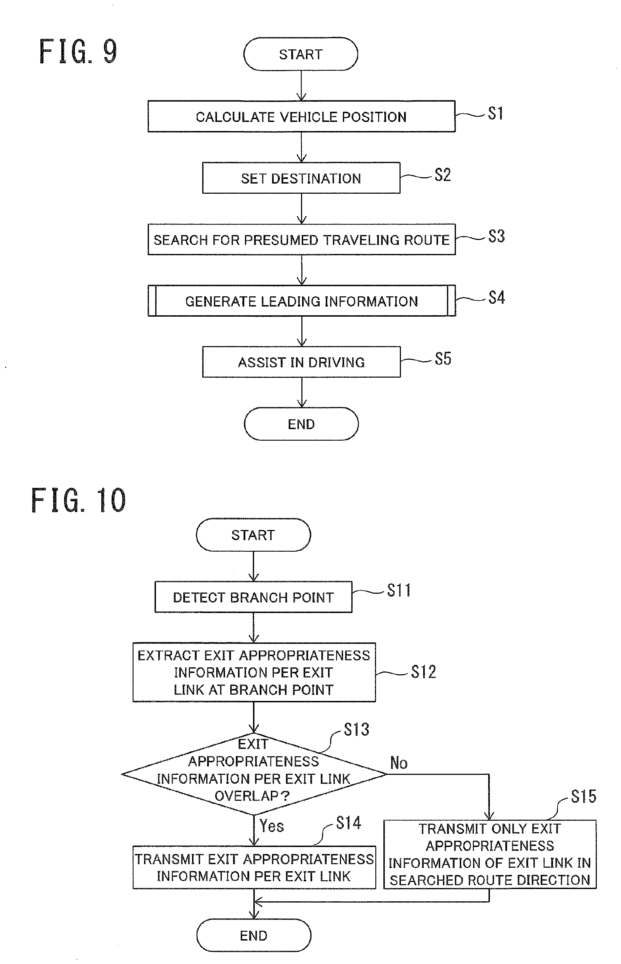

An example of a driving assistance method according to the embodiment of the present invention is described below with reference to the flowchart illustrated in FIG. 9. In step S1, the vehicle position calculation unit 11 calculates a current position of the vehicle on the map data M stored in the storage device 7 in accordance with the positional information acquired by the GNSS receiver 31. In step S2, the destination setting unit 12 sets a destination on the map data M stored in the storage device 7 in accordance with the instruction information input by the occupant via the input device 4. In step S3, the route search unit 13 searches for a route on a road that the vehicle is presumed to follow from the current position (departure point) of the vehicle calculated by the vehicle position calculation unit 11 to the destination set by the destination setting unit 12.

In step S4, the leading information generation unit 14 generates the leading information for leading the vehicle to follow the route searched by the route search unit 13 (the searched route), so as to transmit the generated leading information to the vehicle control device 2 via the communication network such as a CAN bus and also output the information to the presentation control unit 15. The searched route is presumed below to be led to the branch road BR2 in the road section, as illustrated in FIG. 4A, in which the lane L24 of the adjacent two lanes L23 and L24 on the main road MR2 branches into the branch road BR2 through the branch point while the other lane L23 belongs to the main road MR2, and in which the vehicle is permitted to exit from both the lane L23 and the lane L24 toward the branch road BR2 at the branch point. When the vehicle reaches a point within a predetermined distance from the branch point, and the vehicle is traveling in the lane L23 belonging to the main road MR2 after passing by the branch point, the leading information generation unit 14 generates the leading information to lead the vehicle to the lane L24 branching into the branch road BR2 through the branch point.

In step S5, the vehicle control device 2 receives the leading information transmitted from the leading information generation unit 14 so as to control the vehicle in accordance with the received leading information. The presentation control unit 15 causes the display 51 to display the image or causes the speaker 52 to output the voice so as to present the guide information for leading the vehicle to the searched route to the occupant in accordance with the leading information transmitted from the leading information generation unit 14.

An example of the leading information generation process in step S4 illustrated in FIG. 9 is described in more detail below with reference to the flowchart as illustrated in FIG. 10. In step S11, the leading information generation unit 14 detects the branch point present in the traveling direction of the vehicle on the map data M stored in the storage device 7 in accordance with the current position of the vehicle calculated by the vehicle position calculation unit 11 and the searched route searched by the route search unit 13.

In step S12, the leading information generation unit 14 extracts, from the map data M stored in the storage device 7, the route-side exit appropriateness information indicating appropriateness for making an exit for the road toward the searched route (exit link), and the non-route-side exit appropriateness information indicating appropriateness for making an exit for the road toward the non-searched route (exit link) about the respective lanes present at the branch point detected in step S11.

In step S13, the leading information generation unit 14 compares per lane the route-side exit appropriateness information and the non-route-side exit appropriateness information extracted in step S12, and determines the presence or absence of a lane allowing the vehicle to exit toward both the searched route and the non-searched route. For example, at the branch point as illustrated in FIG. 6A, the route-side exit appropriateness information IL2 is compared with the non-route-side exit appropriateness information IL4 per lane, and the lane L23 is determined to allow the vehicle to exit toward both the searched route and the non-searched route. At the branch point as illustrated in FIG. 6B, the route-side exit appropriateness information IL3 is compared with the non-route-side exit appropriateness information IL5 per lane, and no lane is determined to allow the vehicle to exit toward both the searched route and the non-searched route.

When the leading information generation unit 14 determines that there is a lane allowing the vehicle to exit toward both the searched route and the non-searched route in step S13, the process proceeds to step S14. In step S14, the leading information generation unit 14 transmits (provides), to the vehicle control device 2, the leading information including both the route-side exit appropriateness information and the non-route-side exit appropriateness information on the respective lanes present at the branch point. In step S5 illustrated in FIG. 9, when the vehicle control device 2 receives the leading information including both the route-side exit appropriateness information and the non-route-side exit appropriateness information and, for example, when the vehicle 100 reaches a point within a predetermined distance from the branch point and is traveling in the lane L23 belonging to the main road MR2 after passing by the branch point, as illustrated in FIG, 7, the vehicle control device 2 controls the vehicle 100 to make a lane change to the lane L24 branching into the branch road BR2 through the branch point.

When the leading information generation unit 14 determines that there is no lane allowing the vehicle to exit toward both the searched route and the non-searched route in step S13 illustrated in FIG. 10, the process proceeds to step S15. In step S15, the leading information generation unit 14 selectively transmits (provides) the route-side exit appropriateness information, without transmitting the non-route-side exit appropriateness information, about the respective lanes present at the branch point to the vehicle control device 2. In step S5 illustrated in FIG. 9, when receiving the leading information selectively including the route-side exit appropriateness information without including the non-route-side exit appropriateness information, the vehicle control device 2 controls the vehicle to travel in the lane determined to allow the vehicle to exit toward the searched route in accordance to the route-side exit appropriateness information.

According to the embodiment of the present invention, in the road section as illustrated in FIG. 4A, for example, in which the lane L24 of the adjacent two lanes L23 and L24 on the main road MR2 branches into the branch road BR2 through the branch point while the other lane L23 belongs to the main road MR2 after passing by the branch point, when the vehicle reaches the point within the predetermined distance from the branch point and is traveling in the lane L23 belonging to the main road MR2 after passing by the branch point, the vehicle is led to the lane L24 branching into the branch road BR2 through the branch point. The vehicle traveling in the lane L23 belonging to the main road MR2 after passing by the branch point thus can be led to, before reaching the branch point, the lane L24 branching into the branch road BR2 through the branch point, regardless of vehicle control of either autonomous driving by the vehicle control device 2 or manual driving by the driver. The present embodiment thus can prevent the vehicle from keeping traveling in the lane L23 belonging to the main road MR2 to wrongly pass by the branch point, or making a sudden lane change to the lane L24 branching into the branch road BR2 when reaching the branch point, so as to lead the vehicle to the branch road BR2 smoothly.

When the route-side exit appropriateness information and the non-route-side exit appropriateness information on the respective lanes present at the branch point are compared to determine the presence or absence of data on any lane that allows the vehicle to exit toward both the searched route and the non-searched route, and there is data on a lane that allows the vehicle to exit toward both the searched route and the non-searched route, both the route-side exit appropriateness information and the non-route-side exit appropriateness information are transmitted to the vehicle control device 2. The embodiment of the present invention thus can specify the type of the branch point based on both the route-side exit appropriateness information and the non-route-side exit appropriateness information, regardless of the configuration of the branch point, which could not be distinguished by the vehicle control device 2 only according to the route-side exit appropriateness information on each lane present at the branch point. The vehicle thus can be guided appropriately according to the type of the branch point specified.

When the route-side exit appropriateness information and the non-route-side exit appropriateness information on the respective lanes present at the branch point are compared, and there is no data on a lane that allows the vehicle to exit toward both the searched route and the non-searched route, the leading information selectively including the route-side exit appropriateness information, without including the non-route-side appropriateness information, is transmitted to the vehicle control device 2. The vehicle control device 2 then controls the vehicle to travel in the lane determined to allow the vehicle to exit in accordance with the route-side exit appropriateness information, so as to lead the vehicle to the searched route appropriately. Since the route-side exit appropriateness information is selectively transmitted without the non-route-side exit appropriateness information, the amount of data transmitted can be decreased by the non-route-side exit appropriateness information, so that the load of the communication network such as a CAN bus connecting the lead information generation device 1 and the vehicle control device 2 can be reduced.

In the case of the road section as illustrated in FIG. 4A, the vehicle control device 2 controls to lead the vehicle 100, before reaching the branch point, to the lane L24 branching into the branch road BR2 through the branch point, as illustrated in FIG. 7, so as to allow the vehicle 100 to enter the branch road BR2 smoothly. In addition, the presentation control unit 15 presents, before reaching the branch point, the guide information to the occupant by indication or voice to lead the vehicle to the lane L24 branching into the branch road BR2 through the branch point, as illustrated in FIG. 8A, so that the occupant can operate the vehicle to enter the branch road BR2 smoothly in accordance with the guide information.

### (Other embodiments)

While the present invention has been described above by reference to the embodiment, it should be understood that the present invention is not intended to be limited to the descriptions and the drawings composing part of this disclosure. Various alternative embodiments, examples, and technical applications will be apparent to those skilled in the art according to this disclosure.

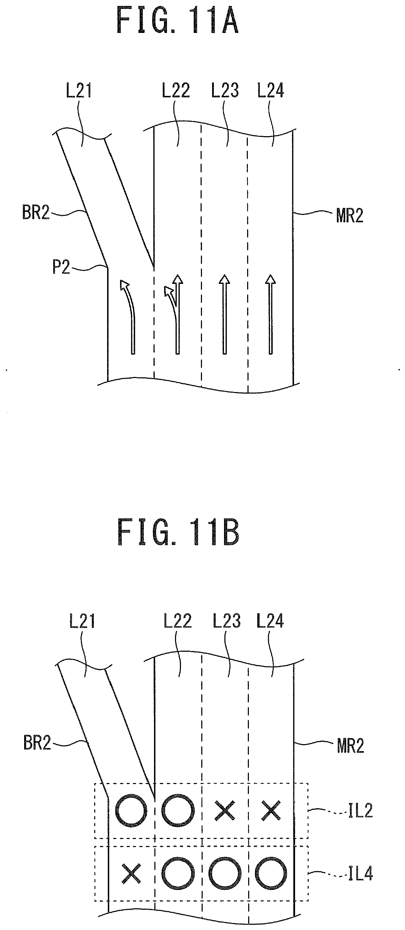

For example, the above embodiment has been illustrated with the case in which the branch road BR2 branches to the right from the main road MR2, as illustrated in FIG. 4A, but may also be applied to a case of a branch point at which the branch road BR2 branches to the left from the main road MR2, as illustrated in FIG. 11A. When the branch road BR2 as illustrated in FIG. 11A is a searched route, the leading information generation unit 14 compares the route-side exit appropriateness information IL2 and the non-route-side exit appropriateness information IL4 on the respective lanes L21, L22, L23, and L24 present at the branch point, so that the lane L22 is determined to allow the vehicle to exit toward both the searched route and the non-searched route, as illustrated in FIG. 11B. The leading information generation unit 14 then transmits both the route-side exit appropriateness information IL2 and the non-route-side exit appropriateness information IL4 to the vehicle control device 2. The vehicle control device 2 thus controls the vehicle so as to travel in the lane L21 branching into the branch road BR2 through the branch point while avoiding traveling in the lane L22 before reaching the branch point, in accordance with the route-side exit appropriateness information IL2 and the non-route-side exit appropriateness information IL4.

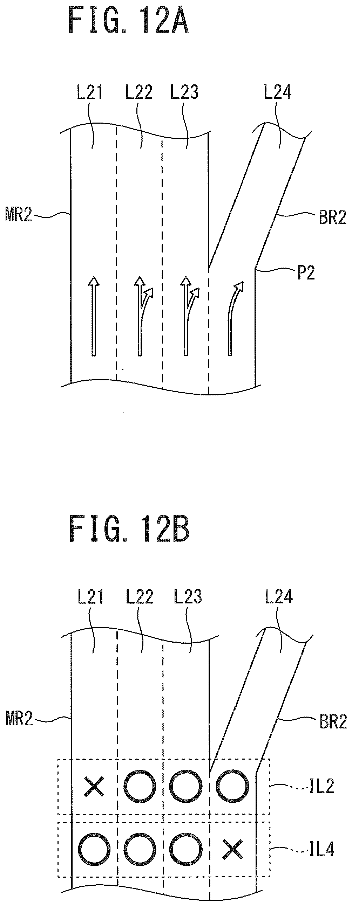

The embodiment may also be applied to a case in which not only the lane L23 adjacent to the lane L24 branching into the branch road BR2 through the branch point, but also the lane L22 adjacent to the lane L23 on the left side allow the vehicle to enter the branch road BR2 at the branch point, as illustrated in FIG. 12A. When the branch road BR2 as illustrated in FIG. 12A is a searched route, the leading information generation unit 14 compares the route-side exit appropriateness information IL2 and the non-route-side exit appropriateness information IL4 on the respective lanes L21, L22, L23, and L24 present at the branch point, so that the lanes L22 and L23 are determined to allow the vehicle to exit toward both the searched route and the non-searched route, as illustrated in FIG. 12B. The leading information generation unit 14 then transmits both the route-side exit appropriateness information IL2 and the non-route-side exit appropriateness information IL4 to the vehicle control device 2. The vehicle control device 2 thus controls the vehicle so as to travel in the lane L24 branching into the branch road BR2 through the branch point while avoiding traveling in the lanes L22 and L23 before reaching the branch point, in accordance with the route-side exit appropriateness information IL2 and the non-route-side exit appropriateness information IL4.

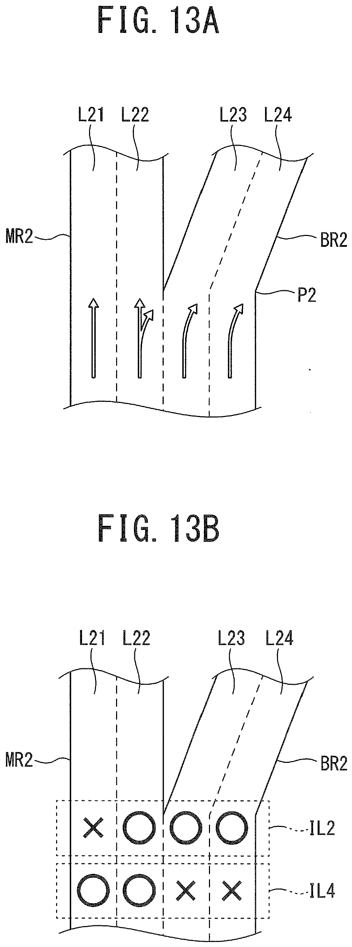

The embodiment may be applied to any configurations about the main road and the branch road that include at least one lane. For example, the above embodiment has been illustrated with the case in which only the lane L24 branches into the branch road BR2 through the branch point in the road section as illustrated in FIG. 4A, but may also be applied to a case in which the plural (two) lanes L23 and L24 branch into the branch road BR2, as illustrated in FIG. 13A. When the branch road BR2 as illustrated in FIG. 13A is a searched route, the leading information generation unit 14 compares the route-side exit appropriateness information IL2 and the non-route-side exit appropriateness information IL4 on the respective lanes L21, L22, L23, and L24 present at the branch point, so that the lane L22 is determined to allow the vehicle to exit toward both the searched route and the non-searched route, as illustrated in FIG. 13B. The leading information generation unit 14 then transmits both the route-side exit appropriateness information IL2 and the non-route-side exit appropriateness information IL4 to the vehicle control device 2. The vehicle control device 2 thus controls the vehicle so as to travel in either the lane L23 or the lane L24 branching into the branch road BR2 through the branch point while avoiding traveling in the lane L22 before reaching the branch point, in accordance with the route-side exit appropriateness information IL2 and the non-route-side exit appropriateness information IL4.

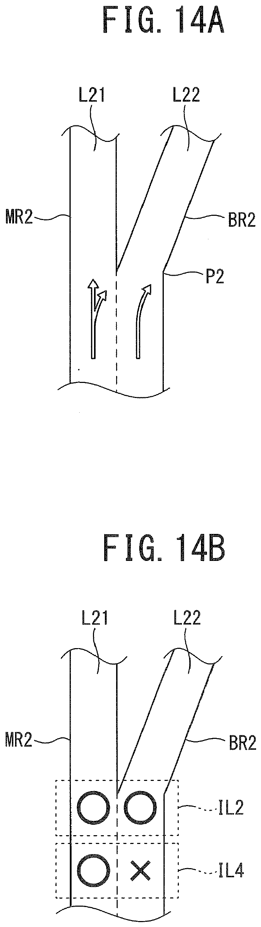

The embodiment may also be applied to a case in which the main road MR2 includes only two lanes L21 and L22 in front of the branch point, and the lane L22 branches into the branch road BR2 through the branch point, as illustrated in FIG. 14A. When the branch road BR2 as illustrated in FIG. 14A is a searched route, the leading information generation unit 14 compares the route-side exit appropriateness information IL2 and the non-route-side exit appropriateness information IL4 on the respective lanes L21 and L22 present at the branch point, so that the lane L21 is determined to allow the vehicle to exit toward both the searched route and the non-searched route, as illustrated in FIG. 14B. The leading information generation unit 14 then transmits both the route-side exit appropriateness information IL2 and the non-route-side exit appropriateness information IL4 to the vehicle control device 2. The vehicle control device 2 thus controls the vehicle so as to travel in the lane L22 branching into the branch road BR2 through the branch point while avoiding traveling in the lane L21 before reaching the branch point, in accordance with the route-side exit appropriateness information IL2 and the non-route-side exit appropriateness information IL4.

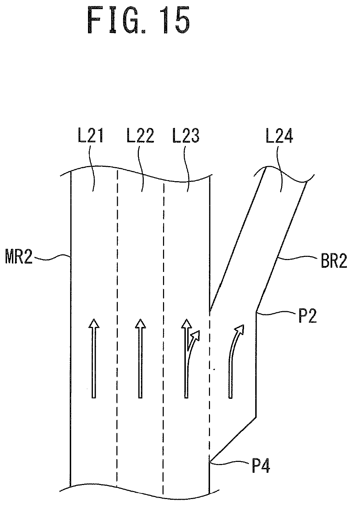

The embodiment may also be applied to a case in which the lane L24 branching into the branch road BR2 through the branch point appears immediately in front of the branch point, as illustrated in FIG. 15. The route-side exit appropriateness information IL2 and the non-route-side exit appropriateness information IL4 are also extracted in the same manner as those for the branch point as illustrated in FIG. 6A. The leading information generation unit 14 compares the route-side exit appropriateness information IL2 and the non-route-side exit appropriateness information IL4, so that the lane L23 is determined to allow the vehicle to exit toward both the searched route and the non-searched route. The leading information generation unit 14 then transmits both the route-side exit appropriateness information IL2 and the non-route-side exit appropriateness information IL4 to the vehicle control device 2. The vehicle control device 2 thus controls the vehicle so as to make a lane change from the lane L23 to the lane L24 at the appearing position P4 of the lane L24, for example, before reaching the branch point, in accordance with the route-side exit appropriateness information IL2 and the non-route-side exit appropriateness information IL4.

The embodiment may be applied to any type of main road and branch road, such as an expressway, a local load, and a toll road. The embodiment may also be applied to a case of a road section including two branch roads branching from a main road on both sides. While the above embodiment has been illustrated with the case in which the vehicle traveling in the lane L23 is regulated (permitted) to enter the branch road BR2 by the traffic regulations in the road section as illustrated in FIG. 4A, the embodiment may also be applied to a case in which the traveling direction in the lane L23 is not restricted by the traffic regulations, so as to also lead the vehicle to the lane L24 before reaching the branch point to enter the branch road BR2 smoothly.

It should be understood that the present invention includes various embodiments not disclosed herein. Therefore, the technical scope of the present invention is defined only by the subject matter according to the claims reasonably derived from the foregoing descriptions.

### REFERENCE SIGNS LIST

- 1: LEADING INFORMATION GENERATION DEVICE
- 2: VEHICLE CONTROL DEVICE
- 3: SENSOR
- 4: INPUT DEVICE
- 5: OUTPUT DEVICE
- 6: ACTUATOR
- 7: STORAGE DEVICE
- 11: VEHICLE POSITION CALCULATION UNIT
- 12: DESTINATION SETTING UNIT
- 13: ROUTE SEARCH UNIT
- 14: LEADING INFORMATION GENERATION UNIT
- 15: PRESENTATION CONTROL UNIT
- 31: RECEIVER
- 32: VEHICLE VELOCITY SENSOR
- 33: ACCELERATION SENSOR
- 34: GYRO SENSOR
- 35: CAMERA
- 36: RADAR
- 37: LASER SCANNER
- 51: DISPLAY
- 52: SPEAKER
- 61: ACCELERATION ACTUATOR
- 62: DECELERATION ACTUATOR
- 63: STEERING ACTUATOR
- 100: VEHICLE

## Claims

1. A driving assistance method comprising:
causing a control circuit to search map data stored in a storage device for a route on a road that a vehicle is presumed to follow; and
in a road section in which one of adjacent two lanes on a main road branches into a branch road through a branch point and the other lane belongs to the main road after passing by the branch point, leading the vehicle traveling in the lane belonging to the main road after passing by the branch point to the lane branching into the branch road through the branch point when the vehicle reaches a point within a predetermined distance from the branch point.

2. The driving assistance method of claim 1, further comprising:
comparing route-side exit appropriateness information indicating appropriateness for making an exit to the searched route per lane present at the branch point through which the searched route enters, with non-route-side exit appropriateness information indicating appropriateness for making an exit to a route different from the searched route per lane, so as to determine whether there is any lane allowing the vehicle to exit toward both the searched route and the different route; and
when there is a lane determined to allow the vehicle to exit toward both routes, transmitting the route-side exit appropriateness information and the non-route-side exit appropriateness information to a vehicle control device for controlling the vehicle.

3. The driving assistance method of claim 2, wherein, when there is no lane determined to allow the vehicle to exit toward both routes, the route-side exit appropriateness information is selectively transmitted to the vehicle control device for controlling the vehicle.

4. The driving assistance method of any one of claims 1 to 3, further comprising controlling the vehicle to be led to the lane branching into the branch road through the branch point.

5. The driving assistance method of any one of claims 1 to 4, further comprising presenting guide information for guiding the vehicle to the lane branching into the branch road through the branch point.

6. A driving assistance device comprising:
a storage device storing map data; and
a control circuit configured to search the map data for a route on a road that a vehicle is presumed to follow,
wherein, in a road section in which one of adjacent two lanes on a main road branches into a branch road through a branch point and the other lane belongs to the main road after passing by the branch point, the vehicle traveling in the lane belonging to the main road after passing by the branch point is led to the lane branching into the branch road through the branch point when the vehicle reaches a point within a predetermined distance from the branch point.
